# FASCICULE DE BREVET EUROPEEN

(11) **EP 0 373 007 B1**
(45) Date de publication et mention de la délivrance du brevet: **26.04.1995**
(21) Numéro de dépôt: 89402759.8
(22) Date de dépôt: 06.10.1989
(51) Int. Cl.: D01F 9/10, C04B 35/80, D04H 1/46

(54) **Textures multidirectionnelles en fibres céramiques à base de composé du silicium, leur fabrication, et matériaux composites ainsi renforcés**
Multidirektionelle Texturen aus keramischen Fibern auf Basis von Silizium enthaltenden Zusammensetzungen, deren Herstellung und damit verstärkte Verbundkörper
Multidirectional ceramic fibre textures based on silicon compounds, their manufacture and composites thus reinforced

(30) Priorité: 06.10.1988 FR 8813132
(43) Date de publication de la demande: 13.06.1990
(73) Titulaire: SOCIETE EUROPEENNE DE PROPULSION, 92150 Suresnes (FR)
(72) Inventeur: Olry, Pierre, F-33200 Bordeaux (FR); Thebault, Jacques, F-33200 Bordeaux (FR)
(74) Mandataire: Joly, Jean-Jacques

(56) Documents cités:
- EP-A- 0 212 485
- EP-A- 0 251 678
- WO-A-81/02734
- DE-A- 2 500 082
- GB-A- 998 089

## Description

La présente invention concerne la fabrication de textures de renfort multidirectionnelles essentiellement en fibres céramiques à base de composé du silicium pour la réalisation de matériaux composites.

La fabrication de fibres en céramique au silicium à partir de précurseurs contenant du silicium est une technique connue. Les précurseurs sont des composés organométalliques du silicium, notamment de la famille des polycarbosilanes. Ces composés conduisent à une matière céramique à base de composé du silicium lorsqu'ils sont thermolysés à une température supérieure à 800 degrés C en atmosphère contrôlée (azote, argon, vide, gaz ammoniac,...)

Certains des composés organométalliques du silicium sont filables et peuvent donc conduire à des fibres en un matériau céramique à base de composé du silicium. Dans la description qui suit, on envisagera seulement le cas de fibres formées principalement de carbure de silicium, désignées par fibres SiC. Toutefois, le domaine d'application de l'invention englobe aussi des fibres, autres que les fibres SiC, en une céramique à base de composé du silicium telles qu'elles peuvent être obtenues à partir des composés organométalliques du silicium filables.

Un procédé bien connu de fabrication de fibres SiC comprend les étapes suivantes :
- préparation d'un précurseur consistant en un polycarbosilane (PCS),
- fusion du précurseur et filage,
- traitement d'oxydation dans l'air pour rendre les fibres infusibles,
- céramisation des fibres de PCS oxydé par traitement de pyrolyse jusqu'à environ 1 300 degrés C.

Un tel procédé est décrit dans un article de Y. Hasegawa, M. Iimura et S. Yajima paru dans "Journal of Materials Science" 15 (1980) pp. 720-728.

La fabrication de textures multidirectionnelles utilisables comme textures de renfort pour des matériaux composites, à partir de fibres, implique la mise en oeuvre d'opérations mécaniques textiles sur les fibres, par exemple tissage, nappage, cardage, aiguilletage, ... Pour cela, il est nécessaire que les fibres résistent à ces opérations textiles et que les propriétés mécaniques finales de la fibre ne soient pas dégradées. Or, si les fibres SiC obtenues par le procédé décrit plus haut possèdent une résistance mécanique élevée, elles n'ont qu'un allongement à rupture faible (inférieur à 2 %) et sont par conséquent trop fragiles pour subir sans dommage certaines opérations textiles, en particulier le cardage ou l'aiguilletage.

Un problème similaire a été rencontré avec les fibres carbone utilisées pour la fabrication de textures multidirectionnelles de renfort pour matériaux composites, en particulier du type carbone-carbone. Un précurseur usuel du carbone pour la fabrication de fibres carbone est le polyacrylonitrile (PAN). Les fibres carbone obtenues après transformation du PAN par traitement thermique de carbonisation présentent une trop grande fragilité pour être soumises sans dommage à certaines opérations textiles, en particulier l'aiguilletage. C'est pourquoi, pour la fabrication de textures multidirectionnelles en fibres de carbone, les opérations mécaniques textiles nécessaires sont réalisées sur les fibres PAN à l'état préoxydé car, dans cet état, les fibres présentent une résistance mécanique et un allongement à la rupture suffisants pour supporter sans dommages ces opérations. Le traitement thermique de carbonisation est ensuite effectué sur la texture multidirectionnelle réalisée avec les fibres PAN préoxydées.

Dans le cas des fibres SiC connues, le processus décrit ci-dessus pour les fibres carbone ne peut être transposé. En effet, la fibre précurseur (par exemple PCS) ne présente aucune résistance mécanique, même après le traitement usuel d'oxydation dans l'air. A aucun des stades décrits plus haut de l'élaboration de fibres SiC on ne trouve donc des fibres qui possèdent les caractéristiques nécessaires pour les rendre aptes à supporter tout type d'opération textile.

Aussi, la présente invention a-t-elle pour but de fournir un procédé d'élaboration de texture multidirectionnelle en fibres céramiques à base de composé du silicium, procédé au cours duquel tout type d'opération textile peut être mis en oeuvre sans dégradation des fibres et de leurs propriétés mécaniques dans la texture obtenue.

Ce but est atteint grâce à un procédé selon lequel, conformément à l'invention, on complète la réticulation des fibres en précurseur à l'état infusible tout en les conservant à l'état organique, on soumet les fibres réticulées à une ou plusieurs opérations textiles pour former ladite texture multidirectionnelle et on soumet ensuite la texture à un traitement de pyrolyse pour provoquer la céramisation des fibres afin d'obtenir la texture recherchée en fibres céramiques à base de composé du silicium.

De façon surprenante, il a en effet été observé que, partant de fibres en précurseur à l'état infusible qui ne présentent pratiquement aucune résistance mécanique, pour aboutir à des fibres céramisées fragiles qui ont un allongement à rupture inférieur à 2 %, on peut passer par un état intermédiaire dans lequel les fibres ont acquis une résistance mécanique suffisante tout en présentant un allongement à rupture élevé (pouvant atteindre 8 %).

Cet état intermédiaire correspond à une réticulation poussée des fibres en précurseur infusible. Cette réticulation poussée se fait sans augmenter le taux d'oxygène dans les fibres rendues infusibles par oxydation.

Dans le cas de précurseur PCS, le complément de réticulation est effectué en soumettant les fibres à un traitement thermique modéré en atmosphère neutre. Ce traitement thermique est réalisé à une température comprise entre 250 et 550 degrés C pendant une durée comprise entre 1/2 h et 10 h, sous atmosphère d'azote ou d'argon.

En permettant de réaliser facilement différentes opérations textiles, comme par exemple le tissage bi ou tridimensionnel, l'invention permet d'obtenir des textures de renfort tissées bi ou tridimensionnelles essentiellement en fibres céramiques à base de composé du silicium, ainsi que des matériaux composites, notamment à matrice céramique comprenant de telles textures.

De plus, en rendant possible l'aiguilletage, l'invention permet d'obtenir des produits nouveaux constitués par des textures de renfort multidirectionnelles essentiellement en fibres céramiques à base de composé du silicium comprenant des couches superposées bidimensionnelles liées entre elles par aiguilletage, ainsi que des matériaux composites comprenant de telles textures de renfort au sein d'une matrice, notamment une matrice céramique.

L'invention sera mieux comprise à la lecture de la description faite ci-après, à titre indicatif mais non limitatif, en référence aux dessins annexés sur lesquels :
- la figure 1 est un organigramme illustrant les phases successives de réalisation d'une texture de renfort en fibres SiC suivant un procédé de l'art antérieur,
- la figure 2 est un organigramme illustrant les phases successives de réalisation d'une texture de renfort en fibres SiC suivant un mode de réalisation du procédé conforme à l'invention, et,
- la figure 3 montre des courbes illustrant les variations de la résistance en traction et de l'allongement à rupture de fibres en précurseur PCS oxydé, après un traitement thermique, en fonction de la température à laquelle le traitement thermique est conduit.

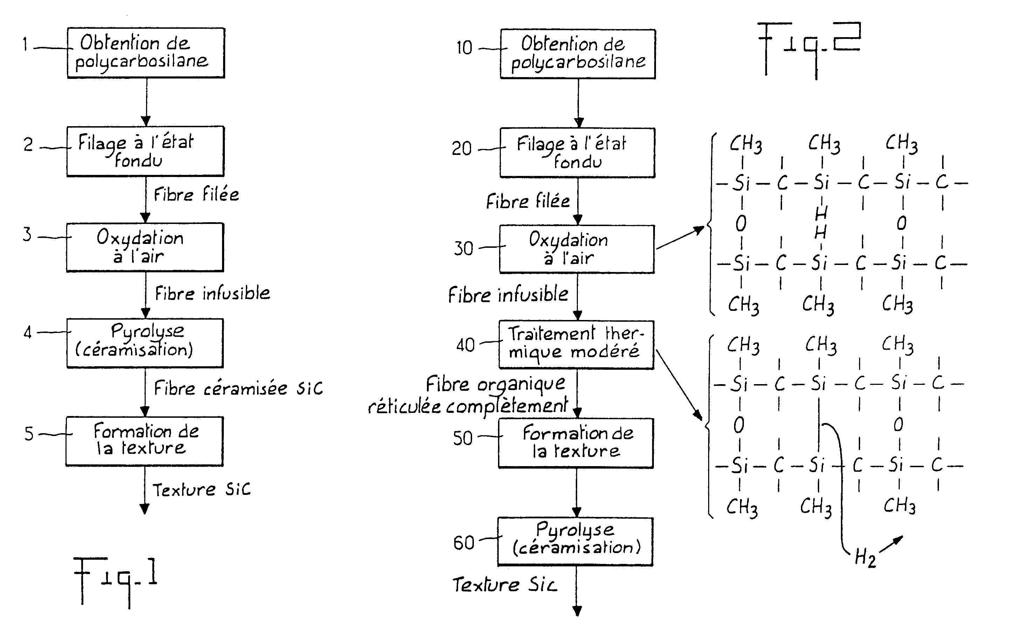

Comme montré par la figure 1, un procédé connu pour la production de fibres SiC, telles que les fibres "Nicalon" produites par la société japonaise Nippon Carbon Co. Ltd comporte les étapes de :
- obtention d'un polycarbosilane ou PCS (phase 1),
- fusion du PCS à environ 350 degrés C et filage à l'état fondu sous atmosphère neutre (N₂) pour obtenir une fibre filée, (phase 2)
- oxydation dans l'air de la fibre filée, à environ 190 degrés C (phase 3) qui conduit à une réticulation partielle du PCS par l'oxygène, avec prise de poids (d'environ 8 à 10 %), et suffit à rendre la fibre infusible, et
- traitement thermique sous atmosphère neutre (N₂ ou Ar) jusqu'à une température d'environ 1 300 degrés C pour provoquer la céramisation de la fibre en PCS oxydé et la transformer en fibre SiC (phase 4).

Une texture de renfort fibreux est réalisée ensuite par exemple par tissage de la fibre SiC (phase 5).

Si l'on souhaite réaliser une texture de renfort muldirectionnelle de type feutre ou aiguilletée, il faut faire intervenir des opérations mécaniques textiles de type cardage ou aiguilletage. Or, les fibres SiC possèdent un allongement à rupture inférieur à 2 %, et sont donc trop fragiles pour subir de telles opérations.

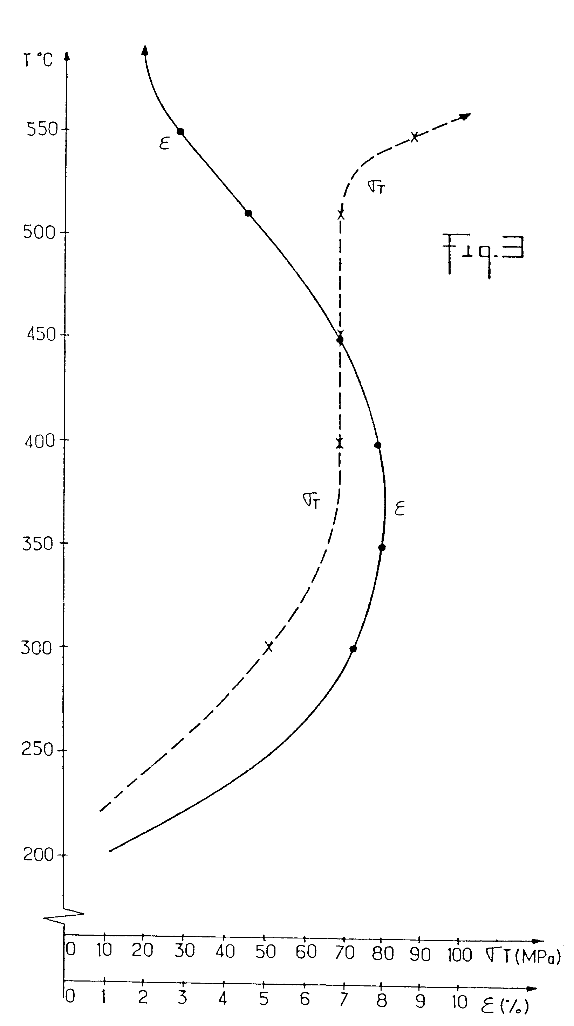

La figure 2 illustre un procédé conforme à l'invention permettant de réaliser des textures de renfort au moins en partie de type feutre ou aiguilletées et formées de fibres SiC.

Comme dans le procédé de l'art antérieur décrit ci-dessus, on retrouve les étapes initiales de :
- obtention d'un PCS (phase 10),
- fusion du PCS à environ 350 degrés C et filage à l'état fondu sous atmosphère neutre (N₂) pour obtenir une fibre en PCS filée (phase 20), et
- oxydation à l'aire de la fibre filée à environ 190 degrés C (phase 30) qui conduit à une réticulation partielle du PCS par l'oxygène et rend la fibre infusible.

Ensuite, conformément à l'invention, la fibre en PCS à l'état infusible est soumise à un traitement thermique modéré (phase 40) à une température inférieure à celle de la céramisation, c'est-à-dire inférieure à la température de la transformation de la fibre organique en fibre minérale. Alors que l'oxydation de la fibre PCS (phase 30) correspond à une réticulation limitée par l'oxygène (ponts Si-O-Si comme montré schématiquement sur la figure 2) qui suffit à rendre la fibre infusible, le traitement thermique modéré (phase 40), qui est possible du fait que la fibre est infusible, permet l'achèvement de la réticulation (ponts Si-Si avec dégagement de H₂ comme montré schématiquement sur la figure 2) tout en conservant la fibre à l'état organique.

La figure 3 illustre les variations de la résistance en traction et de l'allongement à rupture mesurés sur des fibres obtenues après traitement thermique modéré, en fonction de la température à laquelle ce traitement est conduit. Les mesures ont été effectuées après traitement thermique d'une durée d'une heure.

Alors que la fibre PCS oxydé ne présente pratiquement aucune résistance mécanique en traction et que la fibre SiC, si elle présente une bonne résistance en traction, a un allongement à rupture très faible, la figure 3 montre qu'il existe effectivement un état intermédiaire dans lequel la fibre présente à la fois la résistance en traction et l'allongement à rupture suffisants pour la rendre apte à subir sans dommage toutes opérations textiles, y compris le cardage et l'aiguilletage. On observe en particulier que l'allongement à rupture atteint une valeur proche de 8 % pour une température de traitement d'environ 350 degrés C à 400 degrés C, la résistance en traction étant alors approximativement égale à 70 MPa. Pour des valeurs inférieures de la température de traitement, la résistance en traction et l'allongement à rupture mesurés sont plus faibles. Il est souhaitable de réaliser le traitement thermique modéré à une température d'au moins environ 250 degrés C. Aux températures plus élevées, on observe une augmentation de la résistance en traction, mais une diminution assez rapide de l'allongement à rupture. Il est souhaitable de ne pas dépasser une température d'environ 550 degrés C.

Le traitement thermique de complément de la réticulation du PCS rendu infusible par oxydation est réalisé sous atmosphère neutre d'azote ou d'argon pendant une durée de préférence comprise entre 1/2 h et 10 h.

Après la phase de traitement thermique modéré (40), la fibre toujours à l'état organique est utilisée pour réaliser la texture de renfort multidirectionnelle sous la forme désirée, sans limitation quant aux opérations de type textile à mettre en oeuvre.

Ainsi, par exemple, la fibre peut être utilisée pour former des tissus (structures bidimensionnelles) qui peuvent être disposés en couches superposées (à plat ou bobinées) liées entre elles par aiguilletage ou par implantation de fils à travers les couches. La fibre peut également être dévidée et coupée en tronçons de longueur prédéterminée (60 mm par exemple) pour être ensuite cardée afin de former un voile de carde. Plusieurs couches de voile de carde sont superposées par nappage et assemblées par aiguilletage léger, qui conduit à un produit fibreux semblable à un feutre de faible épaisseur. La nappe ainsi formée peut être assemblée par aiguilletage modéré avec un tissu de même nature pour obtenir une structure bidimensionnelle qui peut être à son tour disposée en couches superposées liées entre elles par aiguilletage ou par implantation de fils.

D'une façon générale, la fibre obtenue après la phase de traitement thermique modéré est utilisable pour réaliser des textures de renfort multidirectionnelles par les mêmes procédés que ceux connus mis en oeuvre sur des fibres de précurseur carbone (polyacrylonitrile) préoxydé pour la réalisation de textures de renfort en carbone destinées à des composites carbone-carbone ou carbone-SiC. A titre indicatif, de tels procédés sont décrits dans les demandes de brevet français No 2 557 550, No 2 565 262, No 2 584 106 et No 2 584 107.

Après formation du renfort, celui-ci est soumis à un traitement de céramisation (phase 60) à une température comprise entre 1 000 degrés C et 1 300 degrés C pour transformer les fibres organiques en fibres SiC par pyrolyse et obtenir la texture en fibres SiC recherchée.

La texture en fibres SiC est destinée à constituer une texture de renfort pour un matériau composite de préférence à matrice céramique. Le matériau constitutif de la matrice, par exemple du carbure de silicium, est infiltré au sein de la porosité de la texture de renfort. La mise en place du matériau de la matrice peut être réalisée par un processus d'infiltration chimique en phase vapeur, éventuellement après dépôt sur les fibres du renfort d'un revêtement intermédiaire par exemple en pyrocarbone laminaire ou en nitrure de bore destiné à améliorer l'interface fibres-matrice. Un procédé de réalisation de matériaux composites à renfort fibreux en fibres réfractaires, notamment SiC, et matrice céramique, est décrit dans la demande de brevet français No 2 567 874.

On notera enfin qu'un allongement du fil est observé, lors de la mise en oeuvre du procédé selon l'invention, entre la phase de filage et la fin de la phase de traitement thermique modéré. Il en résulte un desserrement du fil bobiné au moment du filage et, par voie de conséquence, un débobinage plus aisé du fil obtenu après la phase de traitement thermique modéré.

Bien entendu, l'aptitude des fibres obtenues après traitement thermique modéré à subir des opérations textiles peut être exploitée non seulement pour réaliser des textures aiguilletées, mais également des textures tissées par tissage bidimensionnel ou tridimensionnel.

En outre, et comme déjà indiqué, l'invention s'applique non seulement aux fibres SiC, mais aussi à d'autres fibres en céramique à base de composé du silicium issues de composés organométalliques du silicium filables et dans l'élaboration desquelles peut intervenir un traitemnet d'achèvement de réticulation rendant les fibres aptes à subir des opérations textiles.

## Revendications

1. Procédé de fabrication d'une texture de renfort multidirectionnelle essentiellement en fibres céramiques à base de composé du silicium pour la réalisation de matériau composite, procédé selon lequel on file des fibres à partir d'un précurseur de la céramiqueà l'état fondu, et on soumet ensuite les fibres à un traitement de réticulation partielle visant à les rendre infusibles avant de les transformer ultérieurement en fibres en céramique par traitement thermique de pyrolyse pour provoquer leur céramisation, procédé caractérisé en ce que :
on complète la réticulation des fibres en précurseur à l'état infusible, tout en les conservant à l'état organique, on soumet les fibres réticulées à une ou plusieurs opérations textiles pour former ladite texture multidirectionnelle et on soumet ensuite la texture à un traitement thermique de pyrolyse pour provoquer la céramisation des fibres afin d'obtenir la texture recherchée essentiellement en fibres céramiques à base de composé du silicium.

2. Procédé selon la revendication 1 selon lequel on utilise un précurseur de la famille des polycarbosilanes, caractérisé en ce que la réticulation des fibres en précurseur à l'état infusible est complétée par traitement thermique modéré en atmosphère neutre.

3. Procédé selon la revendication 2, caractérisé en ce que le traitement thermique modéré est réalisé à une température comprise entre 250 et 550 degrés C.

4. Procédé selon l'une quelconque des revendications 1 à 3, caractérisé en ce que l'on soumet les fibres réticulées à une opération de tissage.

5. Procédé selon la revendication 4, caractérisé en ce que l'on soumet les fibres réticulées à une opération de tissage tridimensionnel.

6. Procédé selon l'une quelconque des revendications 1 à 3, caractérisé en ce que les opérations textiles comprennent la formation de couches bidimensionnelles de fibres, la superposition des couches et la liaison des couches entre elles par aiguilletage

7. Texture de renfort multidirectionnelle pour matériau composite réalisée essentiellement en fibres céramiques à base d'un composé du silicium, pour la réalisation de matériau composite, caractérisée en ce que les fibres sont à base d'un composé du silicium obtenu par transformation d'un précurseur de ce composé par traitement thermique et la texture comprend des couches superposées bidimensionnelles liées entre elles par aiguilletage.

8. Texture selon la revendication 7, caractérisée en ce que les fibres sont essentiellement en carbure de silicium.

9. Matériau composite ayant une texture de renfort obtenue selon le procédé de l'une quelconque des revendications 1 à 6 et une matrice en matériau céramique.

10. Matériau composite ayant une texture de renfort multidirectionnelle essentiellement en fibres céramiques à base de composé du silicium et une matrice en matériau céramique, caractérisé en ce que la texture de renfort est conforme à l'une quelconque des revendications 7 et 8.

## Claims

1. Process for the manufacture of a multidirectional reinforcement texture made essentially of ceramic fibers having a silicon compound base for the manufacture of composite materials, process consisting in spinning the fibers from a ceramic precursor in a molten state and then subjecting said fibers to a partial cross-linking treatment with a view to making them infusible before a subsequent transformation of said fibers into ceramic fibers through a heat treatment by pyrolysis, inducing a ceramic state of said fibers, process characterized in that:
the cross-linking of the fibers into the precursor in an infusible state is completed, while said fibers are maintained in an organic state, the cross-linked fibers are sujected to one or more textile-related operations to form said multidirectional texture, and the texture is then heat-treated by pyrolysis to induce a ceramic state of the fibers in order to obtain the texture made essentially of ceramic fibers having a silicon compound base.

2. Process according to claim 1, consisting in using a precursor of the polycarbosilane family, characterized in that the cross-linking of the fibers into the precursor in an infusible state is completed by a moderate heat treatment in a neutral environment.

3. Process according to claim 2, characterized in that the moderate heat treatment is performed at a temperature of between 250 and 550 degrees Celsius.

4. Process according to any one of claims 1 to 3, characterized in that the cross-linked fibers are subjected to a weaving operation.

5. Process according to claim 4, characterized in that the cross-linked fibers are subjected to a three-dimensional weaving operation.

6. Process according to any one of claims 1 to 3, characterized in that the textile-related operations comprise the steps of forming two-dimensional layers of fiber, superposing said layers and linking said layers together by needling.

7. Multidirectional reinforcement texture for composite material made essentially of ceramic fibers having a silicon compound base for the production of composite material, characterized in that the fibers have a silicon compound base obtained by transforming a precursor of this compound by a heat treatment and the texture comprises superposed two-dimensional layers linked together by needling.

8. Texture according to claim 7, characterized in that the fibers are made essentially of silicon carbide.

9. Composite material having a reinforcement texture obtained from the process according to any one of claims 1 to 6 and a matrix made of ceramic material.

10. Composite material having a multidirectional reinforcement texture made essentially of ceramic fibers having a silicon compound base and a matrix made of ceramic material, characterized in that the reinforcement texture is in accordance with any one of claims 7 and 8.

## Patentansprüche

1. Verfahren zur Herstellung einer multidirektionellen Verstärkungstextur im wesentlichen aus Keramikfasern auf der Grundlage einer Siliciumverbindung zur Herstellung eines Verbundwerkstoffes, bei dem Fasern augehend von einem Keramikvorprodukt im geschmolzenen Zustand gesponnen und die Fasern dann einer Behandlung zur partiellen Vernetzung unterworfen werden, um sie unschmelzbar zu machen, bevor sie schließlich durch thermische Pyrolysebehandlung in Keramikfasern umgewandelt werden, um ihre Keramisierung hervorzurufen,
**dadurch gekennzeichnet, daß**
die Vernetzung der Fasern im Vorprodukt im unschmelzbaren Zustand derart vervollständigt wird, daß sie im organischen Zustand erhalten bleiben, die Fasern einem oder mehreren Webvorgängen unterworfen werden, um die multidirektionelle Textur zu bilden, und
die Textur dann einer thermischen Pyrolysebehandlung unterworfen wird, um die Keramisierung der Fasern zu bewirken und die gewünschte Textur im wesentlichen aus Keramikfasern auf der Grundlage der Siliciumverbindung zu erhalten.

2. Verfahren nach Anspruch 1, bei dem man ein Vorprodukt aus der Gruppe der Polycarbosilane verwendet,
**dadurch gekennzeichnet, daß**
die Vernetzung der Fasern im Vorprodukt im unschmelzbaren Zustand durch gemäßigte thermische Behandlung in neutraler Atmosphäre vervollständigt wird.

3. Verfahren nach Anspruch 2,
**dadurch gekennzeichnet, daß**
die gemäßigte thermische Behandlung bei einer Temperatur zwischen 250 und 500°C durchgeführt wird.

4. Verfahren nach einem der Ansprüche 1 bis 3,
**dadurch gekennzeichnet, daß**
die vernetzten Fasern einem Webvorgang unterworfen werden.

5. Verfahren nach Anspruch 4,
**dadurch gekennzeichnet, daß**
die vernetzten Fasern einem dreidimensionalen Webvorgang unterworfen werden.

6. Verfahren nach einem der Ansprüche 1 bis 3,
**dadurch gekennzeichnet, daß**
die Webvorgänge die Bildung zweidimensionaler Faserschichten, die Übereinanderlagerung der Schichten und die Verbindung der Schichten durch Vernadeln umfaßt.

7. Multidirektionelle Verstärkungsstruktur für einen Verbundwerkstoff, der im wesentlichen aus Keramikfasern auf der Grundlage einer Siliciumverbindung besteht, zur Herstellung eines Verbundwerkstoffes,
**dadurch gekennzeichnet, daß**
die Fasern auf der Grundlage einer Siliciumverbindung hergestellt sind, die durch Umwandlung eines Vorproduktes dieser Verbindung durch thermische Behandlung erhalten wird, und
die Textur übereinandergelagerte zweidimensionale Schichten aufweist, die untereinander durch Vernadelung verbunden sind.

8. Textur nach Anspruch 7,
**dadurch gekennzeichnet, daß**
die Fasern im wesentlichen aus Siliciumcarbid bestehen.

9. Verbundwerkstoff mit einer Verstärkungstextur, die nach dem Verfahren nach einem der Ansprüche 1 bis 6 erhalten wird, und mit einer Matrix aus einem Keramikmaterial.

10. Verbundwerkstoff mit einer multidirektionellen Verstärkungstextur im wesentlichen aus Keramikfasern auf der Grundlage einer Siliciumverbindung und einer Matrix aus einem Keramikmaterial,
**dadurch gekennzeichnet, daß**
die Verstärkungstextur nach Anspruch 7 oder 8 ausgebildet ist.
